# EUROPÄISCHE PATENTANMELDUNG

(11) **EP 1 346 900 A1**
(43) Veröffentlichungstag der Anmeldung: **24.09.2003**
(21) Anmeldenummer: 03003880.6
(22) Anmeldetag: 20.02.2003
(51) Int. Cl.: B62B 7/10, B62B 5/00

(54) **Kinderwagen**

(30) Priorität: 20.03.2002 DE 20204648 U
(71) Anmelder: ardek Arbeitsgemeinschaft der Kinderausstatter e.G., 65719 Hofheim (DE)
(72) Erfinder: Beger, Udo, 84030 Ergolding (DE)
(74) Vertreter: Fuchs Mehler Weiss & Fritzsche

(57) **Zusammenfassung**

Es sollen so genannte Jogger-Kinderwagen dahingehend weiterentwickelt werden, daß sie wahlweise als konventioneller Kinderwagen oder als sportliches Fortbewegungsmittel benutzt werden können. Dazu wird vorgeschlagen, bei einem Kinderwagen mit mindestens drei Laufrädern (1a, 1b, 1c, 1d, 1e) und einem Achsrahmen (2), an dem mindestens ein vorderes Laufrad (1a, b) gelagert ist, einem an dem Achsrahmen (2) angreifenden Sitzgestänge (3) zur Aufnahme eines Sitzelementes (4) und einem an dem Achsrahmen (2) und/oder dem Sitzgestänge (3) angreifenden Schiebegestänge (5), dessen oberes Ende als Schiebegriff (6) ausgebildet ist, entweder einen Längsrahmen (8) vorzusehen, der schiebegriffseitig an dem Achsrahmen (2) angreift und an dem in Fahrtrichtung verschiebbar mindestens ein hinteres Laufrad (1d, e) gelagert ist und ein Trittbrett (10) ausgebildet ist, vorzusehen oder einen griffseitig an dem Achsrahmen (2) angreifenden Längsrahmen (8) vorzusehen, der in Form von einem achsrahmenfernen Teil (22) und einem achsrahmennahen Teil (21) ausgebildet ist, die klappbar miteinander verbunden sind, wobei das achsrahmenferne Teil (22) zwei Laufräder (1d, e) aufweist, von denen das eine Laufrad (1d) Bodenberührung hat und das achsrahmenferne Teil (22) auf das achsrahmennahe Teil (21) geklappt ist und das andere Laufrad (1e) Bodenberührung hat, wenn beide Längsrahmenteile (21, 22) auseinandergeklappt sind.

## Beschreibung

Die Erfindung betrifft einen Kinderwagen mit mindestens drei Laufrädern und einem Achsrahmen, an dem mindestens ein vorderes Laufrad gelagert ist, einem an dem Achsrahmen angreifenden Sitzgestänge zur Aufnahme eines Sitzelementes und einem an dem Achsrahmen und/oder dem Sitzgestänge angreifenden Schiebegestänge, dessen oberes Ende als Schiebegriff ausgebildet ist.

Derartige Kinderwagen sind bereits als so genannte Jogger-Kinderwagen bekannt. Gegenüber den herkömmlichen Kinderwagen weisen diese vergleichsweise durchmessergroße Laufräder auf, wobei häufig vorne mittig ein einzelnes Laufrad und hinten konventionell zwei Laufräder angeordnet sind. Zur Verminderung der Fahrgeschwindigkeit sind die bekannten Jogger-Kinderwagen mit einer vom Schiebegriff aus bedienbaren Bremse ausgestattet.

Als nachteilig, da unsportlich und langweilig, wird es bei den bekannten Kinderwagen empfunden, den Kinderwagen beim Joggen oder Rollschuhfahren vor sich herzuschieben, zumal die jeweilige schiebende Person ein entsprechendes Sportgerät, also Lauf- oder Rollschuhe mit sich führen muß.

Demnach lag der Erfindung die Aufgabe zugrunde, einen Kinderwagen bereitzustellen, der wahlweise als konventioneller Kinderwagen oder sportliches Fortbewegungsmittel benutzt werden kann.

Die Aufgabe wird erfindungsgemäß mit einem Kinderwagen gelöst, bei dem schiebegriffseitig an dem Achsrahmen ein Längsrahmen angreift, an dem in Fahrtrichtung verschiebbar mindestens ein hinteres Laufrad gelagert und ein Trittbrett ausgebildet ist. Die Aufgabe wird erfindungsgemäß auch mit einem Kinderwagen gelöst, bei dem schubgriffseitig an dem Achsrahmen ein Längsrahmen angreift, der in Form von einem achsrahmennahen Teil und einem achsrahmenfernen Teil ausgebildet ist, die klappbar miteinander verbunden sind, wobei das achsrahmenferne Teil zwei Laufräder aufweist, von denen das eine Laufrad Bodenberührung hat, wenn das achsrahmenferne Teil auf das achsrahmennahe Teil geklappt ist und das andere Laufrad Bodenberührung hat, wenn beide Längsrahmenteile auseinandergeklappt sind.

Der erfindungsgemäße Kinderwagen ist somit in zwei Stellungen von Längsrahmen zu Achsrahmen bzw. von Längsrahmenteilen zueinander nutzbar. In einer ersten Stellung befindet sich der Längsrahmen und das darauf befestigte Trittbrett in einer zum Achsrahmen eingeschobenen Position bzw. befinden sich die Längsrahmen im aufeinandergeklappten Zustand. Als Längsrahmen wird auch ein auf der Unterseite entsprechend ausgebildetes Trittbrett verstanden. In dieser Stellung kann der Kinderwagen auf konventionelle Art und Weise, beispielsweise beim Einkaufen, benutzt werden. Der enge Radstand sorgt dabei für eine hohe Wendigkeit beim Rangieren. Hat die schiebende Person das Bedürfnis, sich mit höherer Geschwindigkeit fortzubewegen oder sich sportlich zu betätigen, zieht sie den Längsrahmen mit dem mindestens einen Laufrad nach hinten bzw. klappt sie die Längsrahmenteile auseinander, stellt sich mit einem Fuß auf das über dem Längsrahmen angeordnete Trittbrett, welches durch das Hervorziehen des Längsrahmens bzw. das Hinterklappen des achsrahmenfernen Längsrahmenteils ebenfalls nach hinten gewandert ist, und stößt sich mit dem anderen Fuß vom Boden ab, um Geschwindigkeit aufzunehmen.
In einer bevorzugten Ausführungsform der ersten erfindungsgemäßen Lösung ist das mindestens eine hintere Laufrad an dem Trittbrett gelagert und das Trittbrett in Fahrtrichtung verschiebbar am Längsrahmen gelagert. Eine entsprechende bevorzugte Ausführungsform der zweiten erfindungsgemäßen Lösung besteht darin, dass das achsrahmenferne Längsrahmenteil als Trittbrett ausgebildet ist. Diese Maßnahmen führen zu einer konstruktiven Vereinfachung der jeweiligen Kinderwägen.

In einer bevorzugten Ausführungsform umfaßt der Längsrahmen zwei in Fahrtrichtung parallel verlaufende Holme. Zwischen den Holmen kann beispielsweise ein hinteres Laufrad gelagert sein.

Günstigerweise sind die Holme jeweils in einen vorderen Rohrabschnitt und einen hinteren Rohrabschnitt geteilt.

Dabei kann bei beiden Holmen der hintere Rohrabschnitt gegenüber dem vorderen Rohrabschnitt in Führungen verschiebbar sein. Aufgrund dieser konstruktiven Ausgestaltung lassen sich die hinteren Rohrabschnitte gegenüber den vorderen Rohrabschnitten verstellen.

Vorteilhafterweise ist der vordere Rohrabschnitt von beiden Holmen an einem gemeinsamen Verbindungselement an dem Achsrahmen befestigt. Dieses Verbindungselement kann als Gelenk zwischen Achsrahmen und Längsrahmen ausgebildet sein und somit ein Lenken des Kinderwagens ermöglichen.

In einer vorteilhaften Ausgestaltung ist jeweils der hintere Rohrabschnitt zur Lagerung des mindestens einen hinteren Laufrades ausgebildet. Bei einem einzelnen hinteren Laufrad kann dieses zwischen den Holmen angeordnet sein. Sind zwei hintere Laufräder vorgesehen, können diese außerhalb neben den Holmen angebracht sein.

Vorzugsweise ist das Trittbrett an dem jeweils hinteren Rohrabschnitt befestigt, so daß es bei einem Herausziehen des mindestens einem hinteren Laufrades ebenfalls nach hinten wandert und so in eine Position gebracht wird, in der die schiebende Person bequem auf das Trittbrett aufsteigen kann.

In einer besonders bevorzugten Ausführung ist das mindestens eine hintere Laufrad senkrecht zur Rollrichtung drehbar gelagert. Dies erhöht insbesondere im eingeschobenen bzw. eingeklappten Zustand des Kinderwagens signifikant die Lenkbarkeit.

Es hat sich als vorteilhaft herausgestellt, im Falle drehbarer hinterer Laufräder auch Mittel zur Blockierung der Drehbarkeit vorzusehen, die an Längsrahmen oder/und am Trittbrett angebracht sind. Diese Mittel können automatisch beim Ein- und Ausklappen oder auch manuell betätigt werden und dienen insbesondere dazu, die Drehbarkeit im ausgeklappten bzw. ausgezogenen Zustand zu blockieren. Denn bei rollerartiger Fortbewegung mit dem Kinderwagen kann es durch die Drehbarkeit des mindestens einen hinteren Laufrades bei Unebenheiten zu Stürzen kommen.

Da bei der rollerartigen Fortbewegung mit dem ausgezogenen bzw. ausgeklappten Kinderwagen mittels Gewichtsverlagerung gelenkt wird, was zu einem Verkippen des Trittbretts führt, ist das mindestens eine hintere Laufrad wippbar gelagert. Ein entsprechendes Wipplager kann die Torsionskräfte auffangen, die von dem verkippten Trittbrett auf die Lagerung des mindestens einen hinteren Laufrades wirken.

In einer besonders bevorzugten Ausführungsform weist der Kinderwagen zwei zueinander parallele hintere Laufräder vor. In diesem Fall ist es besonders vorteilhaft, wenn die hinteren Laufräder drehbar und wippbar gelagert sind und die zuvor erwähnten Blockierungsmittel vorgesehen sind.

Vorteilhafterweise ist am Kinderwagen ein Stoßschutz vorgesehen, der am Achsrahmen und/oder am Sitzgestell angreift. In der Art eines Abstandshalters wird dadurch das Kind vor dem unmittelbaren Zusammenprall mit umgebenden Gegenständen geschützt.

Als besonders vorteilhaft hat es sich erwiesen, einen Zufaltmechanismus vorzusehen, der am Achsrahmen und/oder am Sitzgestänge und/oder am Längsrahmen angreift, um den Kinderwagen zusammenfalten und leichter transportieren zu können. Dadurch lässt sich der erfindungsgemäße Kinderwagen problemlos im Auto transportieren.

Um möglichst kraftfrei den Kinderwagen schieben oder in Art eines Rollers fortbewegen zu können, sind die Laufräder vorzugsweise mittels Kugellager gelagert.

Bei einer besonderen Ausführungsform ist an dem mindestens einen vorderen Laufrad eine Bremse angeordnet. Mit Hilfe der Bremse kann der Kinderwagen auch bei höheren Fahrgeschwindigkeiten sicher gebremst werden.

Günstigerweise ist die Bremse über einen am Schiebegriff angeordneten Betätigungsgriff bedienbar. Somit liegt der Betätigungsgriff der Bremse in Reichweite der schiebenden Person, die während der Fahrt mit den Händen den Schiebegriff umgreift.

In einer vorteilhaften Ausgestaltung ist das Schiebegestänge über eine gelenkige Anbringung in einer Fahrtstellung und einer Transportstellung fixierbar. Dadurch kann der Kinderwagen, z.B. für den Transport im Kofferraum eines Pkw, in seinen räumlichen Abmessungen verkleinert werden.

Vorzugsweise ist der Schiebegriff an dem Schiebegestänge mit einem Verstellgelenk angebracht. Dieses Verstellgelenk hat zwei Aufgaben. Einerseits kann damit die räumliche Größe des Kinderwagens in der Transportstellung weiter verringert werden, andererseits der Schiebegriff in eine für die schiebende Person bequeme Position gebracht werden.

Bei einer vorteilhaften Ausgestaltung ist das mindestens eine vordere Laufrad durchmessergrößer als das mindestens eine hintere Laufrad ausgebildet. Mit Hilfe des mindestens einen durchmessergrößeren vorderen Laufrades können kleinere Hindernisse einfacher überwunden werden.

Vorteilhafterweise sind an dem Achsrahmen Federelemente angebracht, die während der Fahrt für eine Dämpfung von Schlägen und Stößen aus Unebenheiten sorgen und damit insbesondere den Fahrkomfort des in dem Sitzelement sitzenden Kindes erhöhen.

Anhand der nachfolgenden Zeichnungen wird beispielhaft die Erfindung näher erläutert. Dabei zeigen die:
- Figur 1: eine Seitenansicht eines Kinderwagens entsprechend der ersten erfindungsgemäßen Lösung mit eingeschobenem hinteren Laufrad;
- Figur 2: eine Vorderansicht des Kinderwagens gemäß Figur 1;
- Figur 3: eine perspektivische Ansicht eines Kinderwagens entsprechen der ersten erfindungsgemäßen Lösung mit eingeschobenem hinteren Laufrad ohne Trittbrett;
- Figur 4: eine Ansicht gemäß Figur 3 mit ausgezogenem hinteren Laufrad ohne Trittbrett;
- Figur 5: eine Seitenansicht eines Kinderwagens entsprechend der ersten erfindungsgemäßen Lösung in zusammengefalteter Transportstellung;
- Figuren 6 a-c: einen Kinderwagen gemäß der zweiten erfindungsgemäßen Lösung in verschiedenen Klappzuständen;
- Figuren 7 a-c: eine zweite Ausführungsform des Kinderwagens entsprechend der ersten erfindungsgemäßen Lösung im eingeschobenen Zustand als Sportgerät aus verschiedenen Perspektiven;
- Figuren 8 a-d: den Kinderwagen aus den Figuren 7 a-c im ausgeschobenen Zustand aus verschiedenen Perspektiven;
- Figur 9: einen zusammengefalteten Kinderwagen entsprechend den Figuren 7 a-c, 8 a-d;
- Figuren 10a, b: ein Faltgelenk;
- Figur 11: die Laufräder eines Kinderwagens entsprechend den Figuren 7 a-c, 8 a-d im Rechtslauf von hinten und vorne;
- Figuren 12 a, b: die Laufräder eines Kinderwagen entsprechend Figuren 7 a-c, 8 a-d im Geradelauf von hinten und vorne;
- Figur 13: einen Längsrahmen in Explosionsdarstellung;
- Figuren 14 a, b: einen Kippsattel perspektivisch von hinten und vorne;
- Figuren 15 a, b: einen Lagerbock ohne und mit Laufrädern;
- Figur 16 a: hintere Laufräder mit einem Feststellbügel bei ausgeschobenem Zustand als Sportgerät und

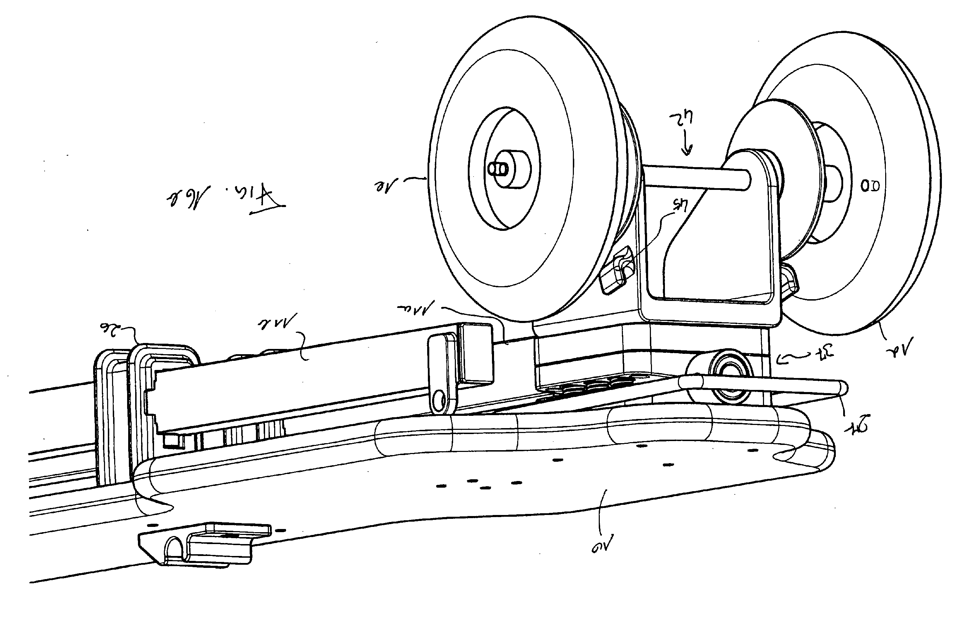

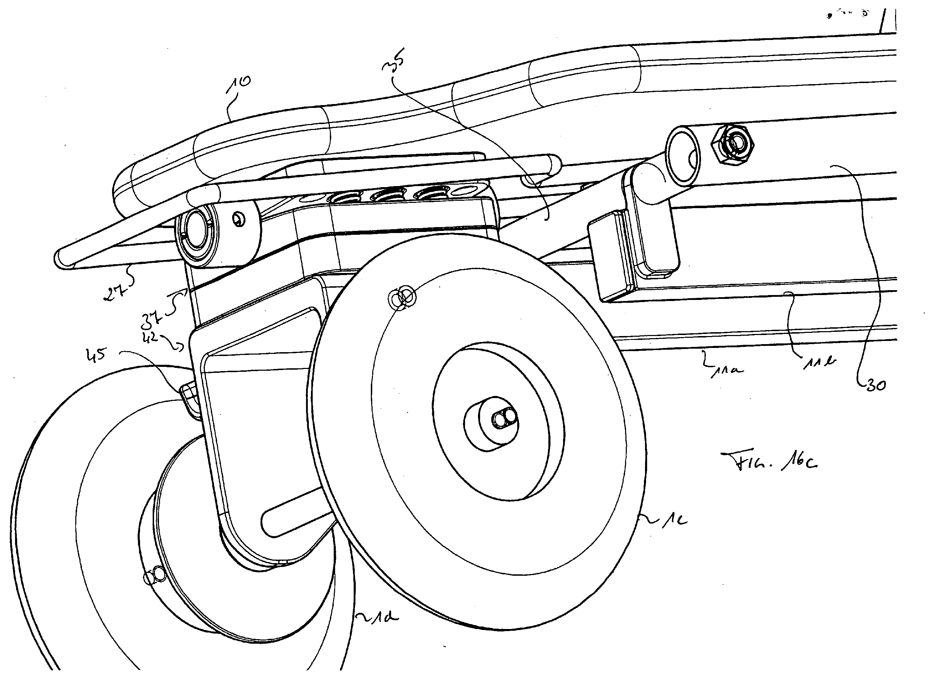

- Figuren 16 b, c: hintere Laufräder mit einem Feststellbügel bei eingeschobenem Zustand als Kinderwagen.

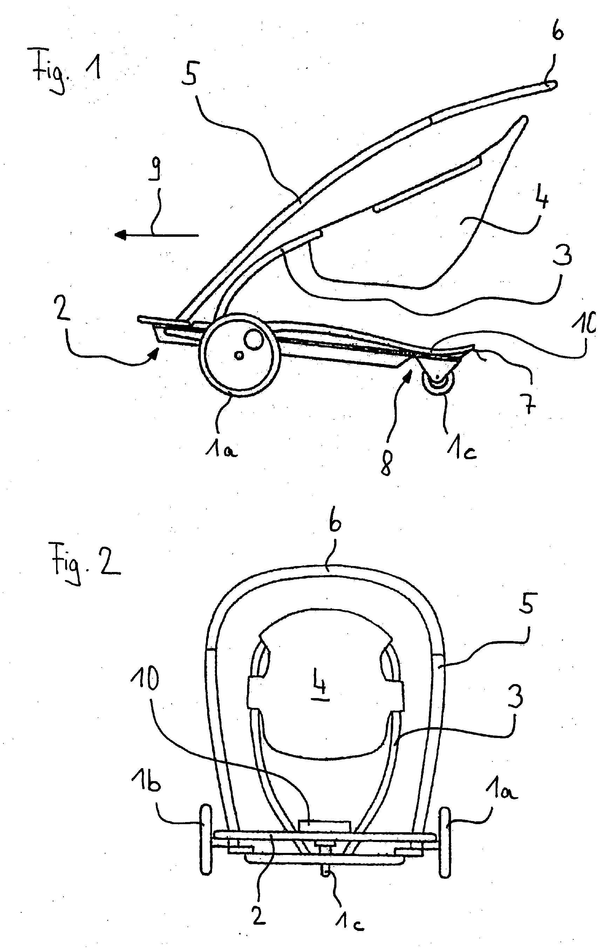

Die Figur 1 zeigt einen erfindungsgemäßen Kinderwagen gemäß der ersten Lösung in einer Seitenansicht mit eingeschobenem hinterem Laufrad 1c und Trittbrett 10. Dabei befinden sich an einem Achsrahmen 2 die vorderen Laufräder 1a, 1b (1b in Figur 2 dargestellt) und an einem Längsrahmen 8 ein einzelnes hinteres Laufrad 1c. Schiebegriffseitig 7 endet im Bereich des hinteren Laufrades 1c das leicht wellenförmig ausgebildete Trittbrett 10. Sowohl das hintere Laufrad 1c als auch das Trittbrett 10 befinden sich somit in der dargestellten eingeschobenen Stellung unterhalb des Sitzelementes 4 bzw. des Schiebegriffs 6, so daß die schiebende Person ungehindert den Kinderwagen vor sich herschieben kann.

Ebenfalls an dem Achsrahmen 2 greifen das Sitzgestänge 3 mit dem daran befindlichen Sitzelement 4 und in Fahrtrichtung 9 davor das Schiebegestänge 5 an.

Wie in der Vorderansicht gemäß Figur 2 zu erkennen ist, sind sowohl das Sitzgestänge 3 als auch das Schiebegestänge 5 parabelförmig ausgebildet. Das hintere Laufrad 1c steht mittig zwischen den durchmessergrößeren vorderen Laufrädern 1a, 1b und über dem hinteren Laufrad 1c ist ebenfalls mittig das Trittbrett 10 angebracht.

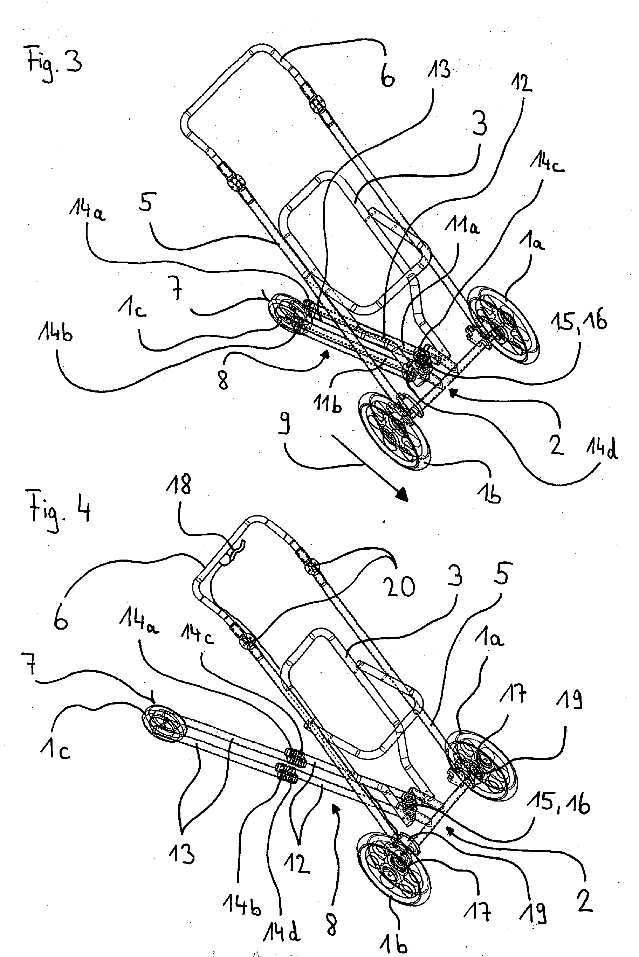

Die Figur 3 zeigt den erfindungsgemäßen Kinderwagen in einer perspektivischen Darstellung mit eingeschobenem hinteren Laufrad 1c und ohne das Trittbrett 10. In der abgebildeten Ausbildungsform sind der Achsrahmen 2 und der Längsrahmen 8 mit einem Verbindungselement 15 verbunden, das als Gelenk 16 ausgebildet ist und somit für eine gute Lenkbarkeit des Kinderwagens sorgt. Der Längsrahmen 8 umfaßt dabei im Wesentlichen die Holme 11a, 11b zwischen denen schiebegriffseitig 7 das einzelne hintere Laufrad 1c und auf der gegenüberliegenden Seite das Verbindungselement 15 angeordnet sind.

Die ortsfest am schiebegriffseitigen 7 Ende der vorderen Rohrabschnitte 12 befestigten Führungen 14a, 14b befinden sich im eingeschobenen Zustand des Längsrahmens 8 in räumlicher Nähe zu dem hinteren Laufrad 1c, während die Führungen 14c, 14d in der Nähe des Verbindungselementes 15 positioniert sind.

In der Figur 4 ist der Kinderwagen mit herausgezogenem Längsrahmen 8 ebenfalls ohne Trittbrett 10 perspektivisch dargestellt, wobei die ortsfest an den hinteren Rohrabschnitten 13 angebrachten Führungen 14c, 14d auf den vorderen Rohrabschnitten 12 schiebegriffseitig 7 bis zu den Führungen 14a, 14b gerutscht sind.

Darüber hinaus ist in der Figur 4 der am Schiebegriff 6 befindliche Betätigungsgriff 18 zum Auslösen der auf die durchmessergrößeren vorderen Laufräder 1a, 1b wirkenden Bremse 17 zu erkennen.

Aufgrund des großen Abstandes der vorderen Laufräder 1a, 1b zu dem einzelnen hinteren Laufrad 1c wäre insbesondere bei herausgezogenem Längsrahmen 8 ohne das Gelenk 16 ein Kurvenfahren kaum möglich. Durch Einbau des Gelenkes 16 zwischen Achsrahmen 2 und Längsrahmen 8 kann die schiebende Person durch seitliches Schwenken des Schiebegriffes 6 über das Schiebegestänge 5 und dem Achsrahmen 2 die beidseitig am Achsrahmen 2 gelagerten vorderen Laufräder 1a, 1b in die gewünschte Richtung dirigieren. Um eine komfortable Fahrtposition für unterschiedlich groß gewachsene schiebende Personen zu gewährleisten, kann der Schiebegriff 6 über die beiden Verstellgelenke 20 an verschiedene Stellungen angepaßt werden.

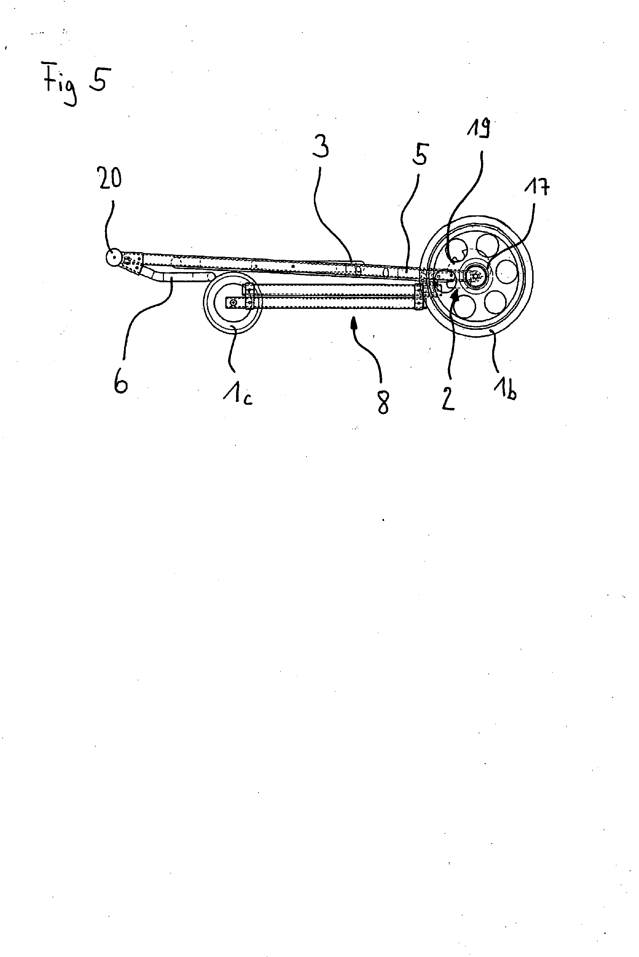

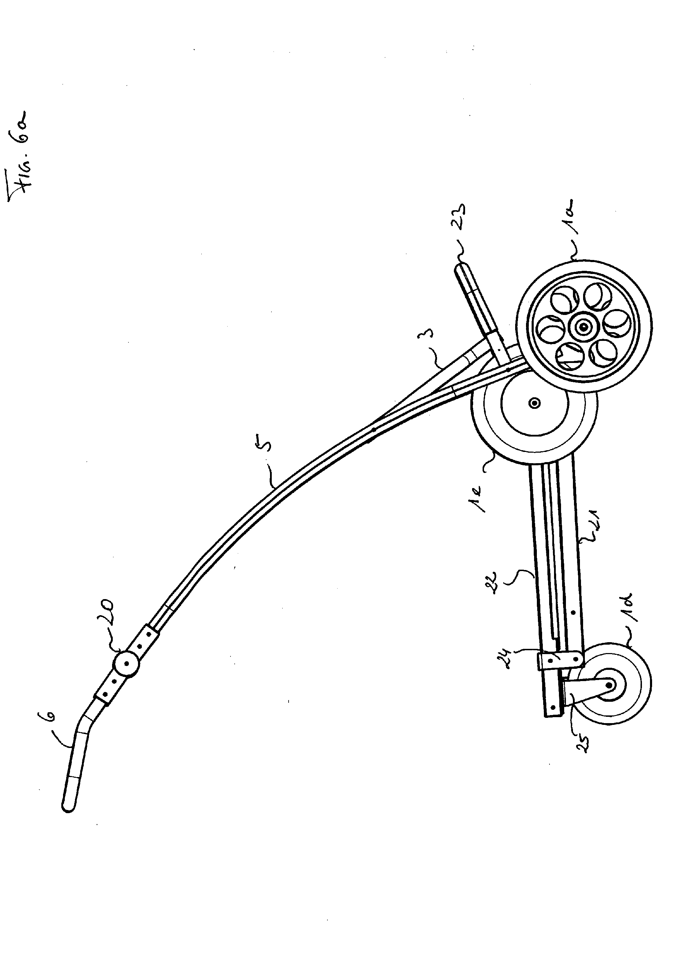

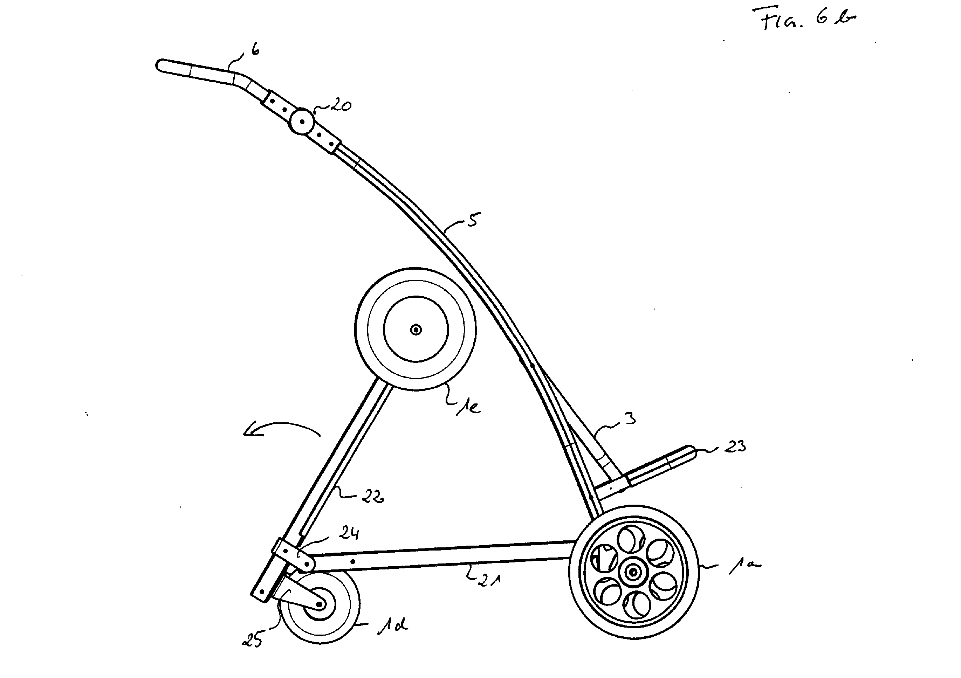

Die Figur 5 zeigt den Kinderwagen mit entferntem Trittbrett 10 in einer Transportstellung beispielsweise zum Transport im Kofferraum eines Pkw. Dafür ist das hintere Laufrad 1c und der Längsrahmen 8 in Richtung des Achsrahmens 2 eingeschoben und das Schiebegestänge 5 über die gelenkige Anbringung 19 annähernd in eine zum Längsrahmen 8 parallele Stellung gebracht worden. Dabei hat sich das Sitzgestänge 3 (s. auch Figur 4), welches beidseitig an den Achsrahmen 2 und das Schiebegestänge 5 angreift (s. auch Fig. 3 und Fig. 4), ebenfalls zusammengefaltet.

Zur weiteren Verkleinerung der Länge des Kinderwagens wurde der Schiebegriff 6 um die Verstellgelenke 20 unter das Sitzgestänge 3 geschwenkt.

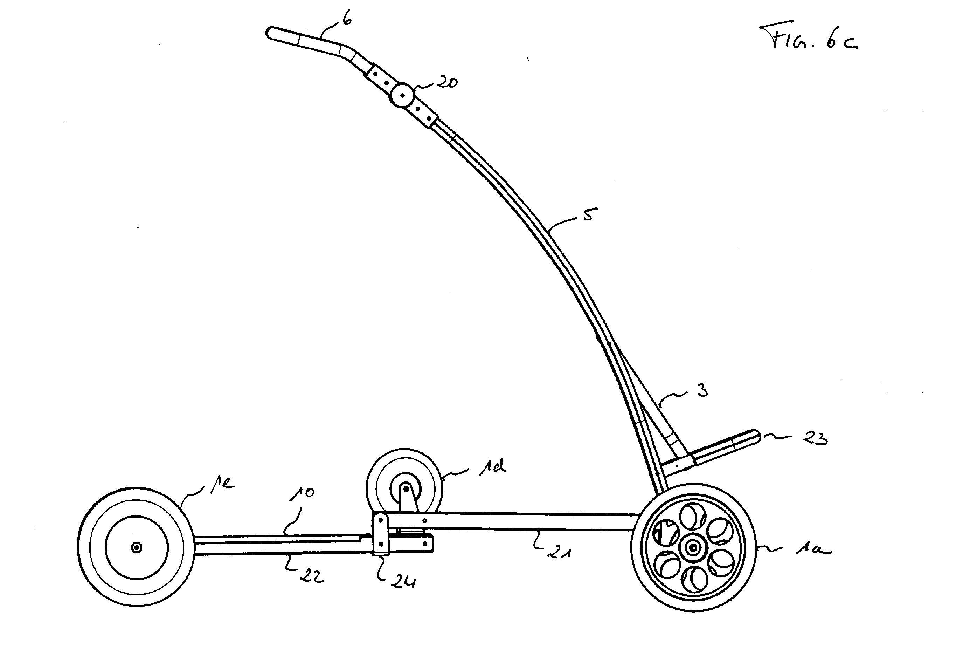

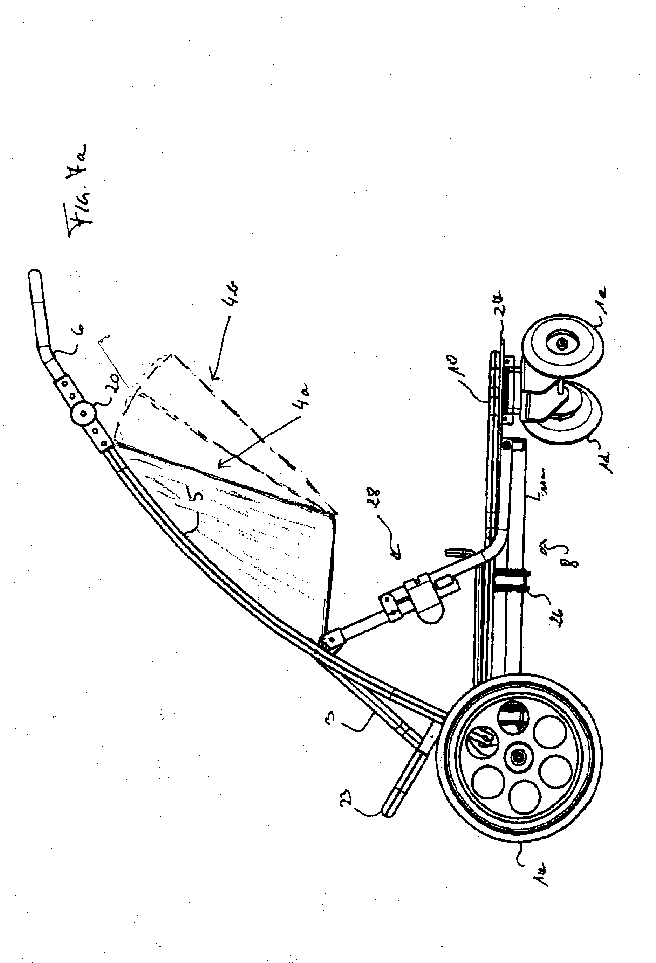

Figur 6 a zeigt einen Kinderwagen gemäß der zweiten erfindungsgemäßen Lösung mit einem achsrahmennahen Längsrahmenteil 21 und einem achsrahmenfernen Längsrahmenteil 22, die mittels einem Klappgelenk 24 übereinandergeklappt sind. An dem achsrahmenfernen Längsrahmenteil 22 sind ein erstes hinteres Laufrad 1 d und ein zweites hinteres Laufrad 1 e befestigt. Im zusammengeklappten Zustand hat das erste hintere Laufrad 1 d Bodenkontakt. Es ist mittels einem Laufbock 25 senkrecht zur Rollrichtung drehbar gelagert. Dadurch wird beim Schieben des Kinderwagens die Lenkbarkeit erhöht. An dem Schiebegestänge 5 und dem Sitzgestänge 3 kann ein Sitzelement in Form einer Stoffbahn befestigt werden, in dem ein Kind sitzen kann. Das sitzende Kind wird über den Stoßschutz 21 vor unmittelbaren Stößen geschützt.

In Figur 6b ist zu sehen, wie die beiden Längsrahmenteile 21 und 22 auseinandergeklappt werden, bis sie den in Figur 6 c gezeigten auseinandergekappten Zustand erreichen. Nun hat das zweite hintere Laufrad 1 e Bodenkontakt. Das ausgeklappte achsrahmenferne Längsrahmenteil 22 fungiert gleichzeitig als Trittbrett 10. Das zweite hintere Laufrad 1 e ist starr montiert, um die Sturzgefahr bei schnellem Rollerfahren bei Bodenunebenheiten zu mindern.

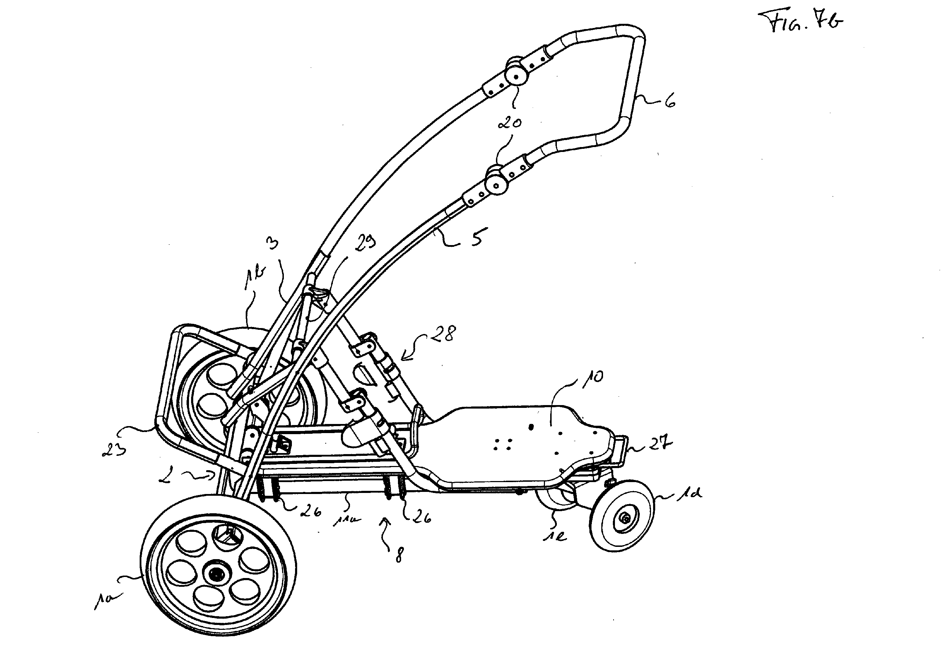

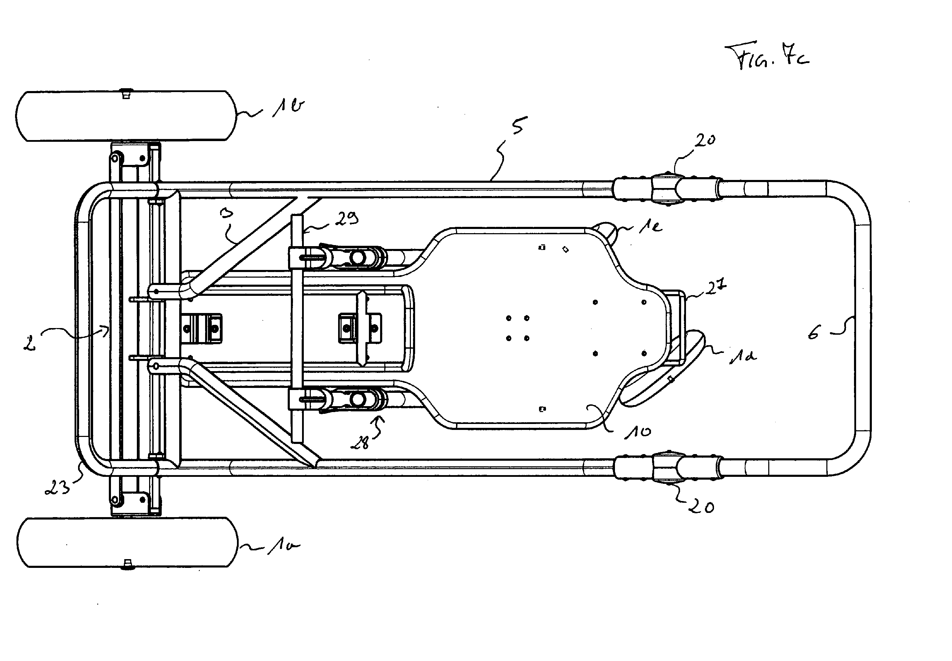

Figur 7a zeigt einen Kinderwagen gemäß der ersten erfindungsgemäßen Lösung in Seitenansicht. Das Trittbrett 10 ist über Schiebeelemente 26 verschiebbar mit den Längsrahmen 8 aus zwei Holmen 11a, b verbunden. An dem Trittbrett 10 sind zwei hintere Laufräder 1d, e parallel zueinander und senkrecht zur Rollrichtung drehbar gelagert. Ferner ist am Trittbrett 10 ein Feststellbügel 27 angeordnet, der sich im zusammengeschobenen Zustand parallel zum Trittbrett 10 befindet, ohne die hinteren Laufräder 1d, e zu blockieren. Der Schiebegriff 6 ist mittels den Verstellgelenken 20 in eine für eine schiebende Person angenehme Position gebracht. Der Kinderwagen in Figur 7a weist ferner einen Zufaltmechanismus auf, der am Sitzgestänge 3 und Längsrahmen 8 angreift, auf den später noch eingegangen werden wird. An dem Sitzgestänge 3 und dem Schiebegestänge 5 ist ein Sitzelement 4a, 4b aus einer Stoffbahn befestigt, die durch geschicktes Falten und Befestigungsmittel wie z. B. Reißverschlüsse oder Knöpfe in eine Sitzposition 4a oder eine Liegeposition 4b gebracht werden kann.

In Figur 7b ist derselbe Kinderwagen perspektivisch von oben bzw. in Figur 7c in Draufsicht dargestellt. Deutlich zu erkennen sind die gedrehten hinteren Laufräder 1d, e, die also nicht durch den Feststellbügel 27 blockiert sind. Ebenfalls gut zu erkennen ist das Sitzgestänge 3 in Form eines Y-Rahmens. Eine Stoffbahn als Sitzelement würde an der Querstange 29 des Sitzgestänges 3 sowie am Schiebegestänge 5 ungefähr auf Höhe der Verstellgelenke 20 eingehängt werden. Durch geschickte Wahl der Stoffbahnlänge würde sie sich zu einem L-förmigen Sitz aushängen, in dem ein Kind Platz nehmen kann.

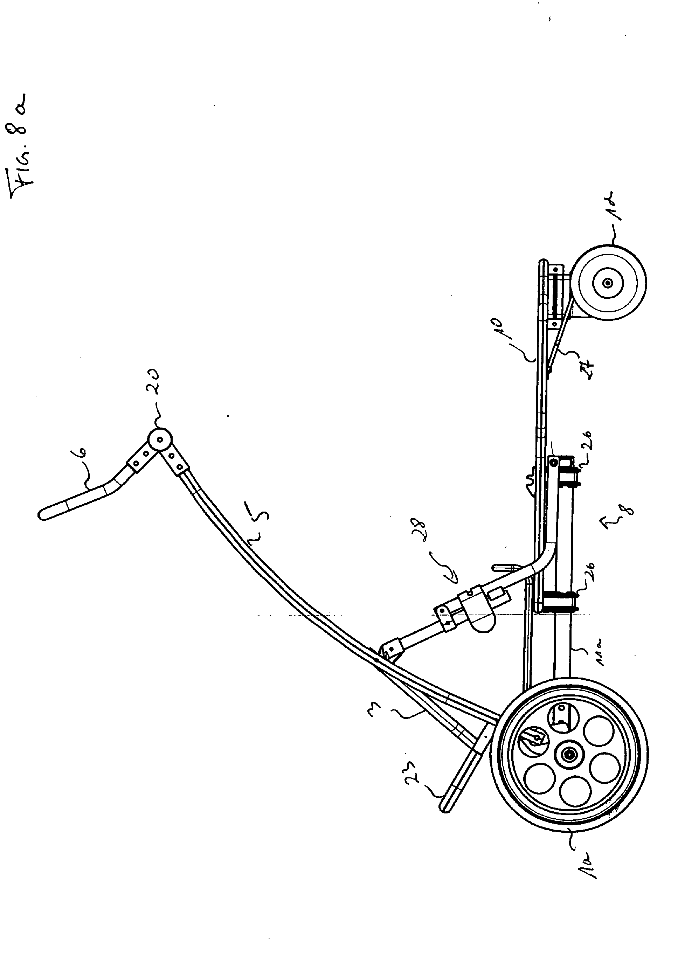

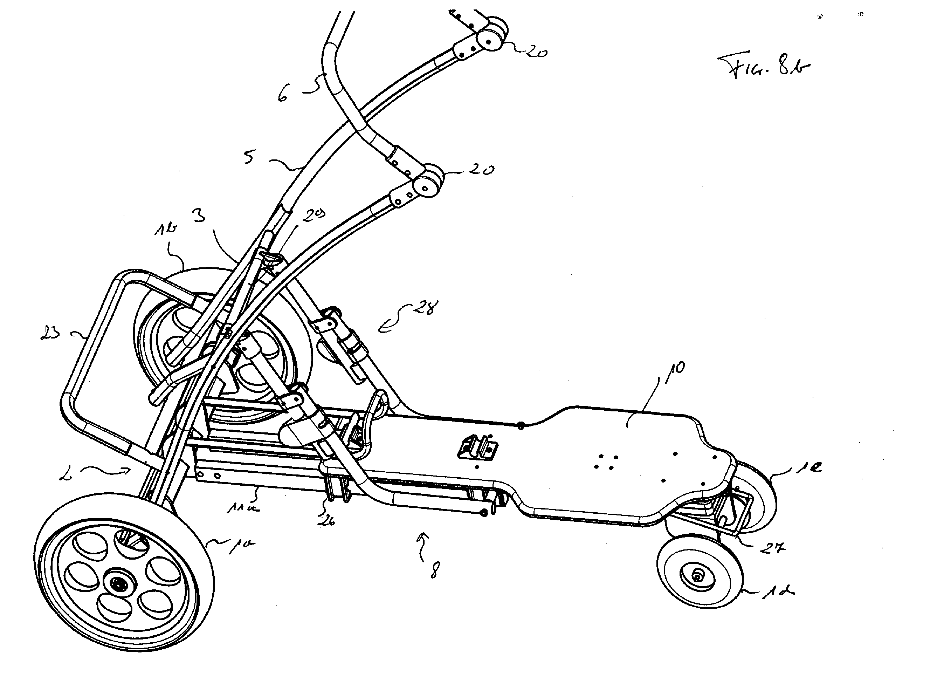

In Figur 8a ist der Kinderwagen der Figuren 7a - c in Seitenansicht im ausgezogenen Zustand als Sportgerät gezeigt. In Figur 8b ist er in perspektivischer Ansicht von oben, in Figur 8c in Draufsicht und in Figur 1d von hinten zu sehen. Der Feststellbügel 27 der drehbaren Hinterachse verläuft im ausgezogenen Zustand unter dem Trittbrett 10, so dass er die Laufräder 1d, e blockiert und sie nicht mehr senkrecht zur Rollrichtung drehbar sind. Ferner ist der Schiebegriff 6 in eine senkrechte Position zum Schiebegestänge 5 gebracht worden. In dieser sportlichen Position kann der Kinderwagen bequemer als Roller benutzt werden.

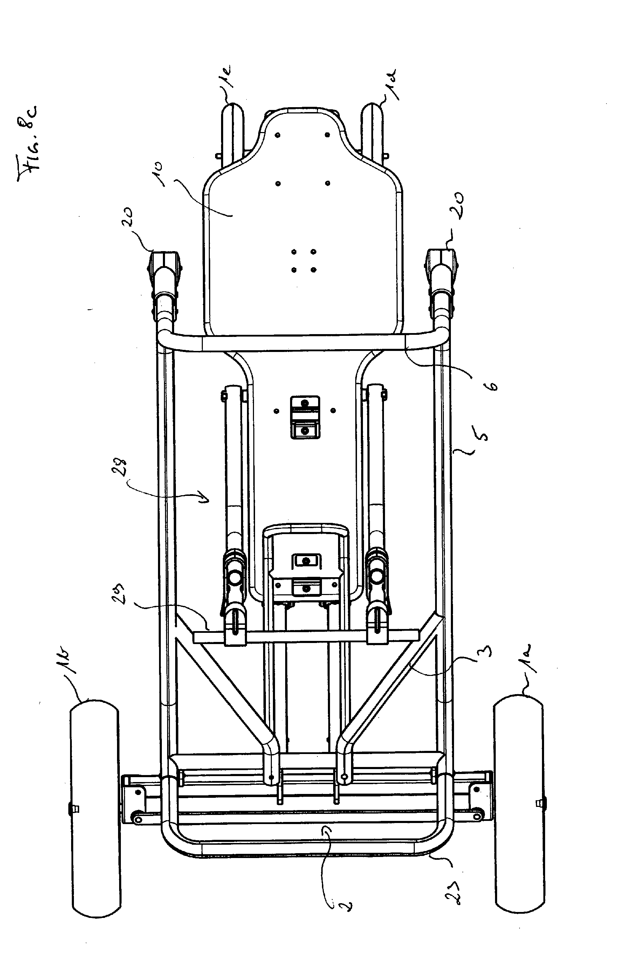

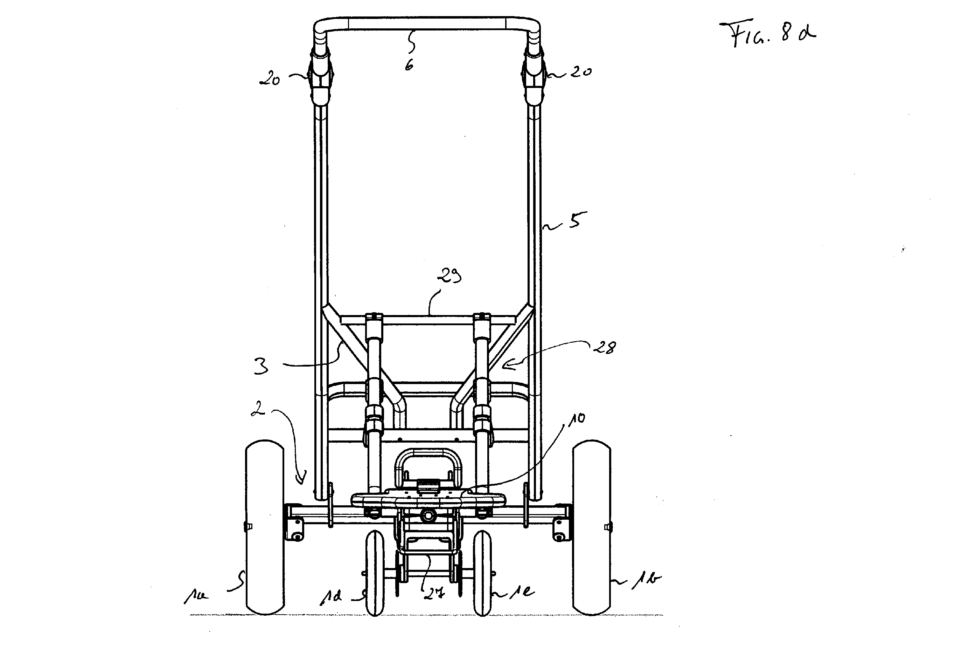

In Figur 9 ist der Kinderwagen der Figuren 7a-c, 8a-d im zusammengefalteten Zustand gezeigt. Einerseits ist der Schiebegriff 6 ganz eingeklappt. Andererseits ist der Zufaltmechanismus 28 aus zwei knickbar miteinander verbundenen Stangen 30, 31 zusammengefaltet, so dass das Schiebegestänge 5 im Wesentlichen parallel zum Längsrahmen 8 ist. Eine weitere Auswirkung des Zusammenfaltens ist, dass, obwohl Trittbrett und Längsrahmen zusammengeschoben sind, der Feststellbügel 27 schräg zum Trittbrett 10 ist, so dass er die Laufräder 1d, e blockiert.

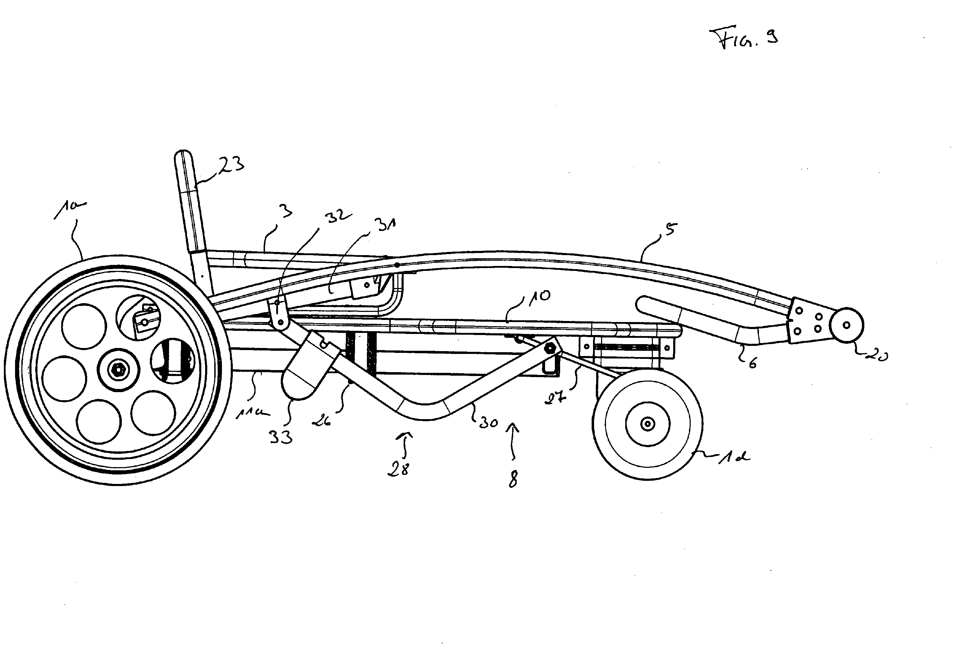

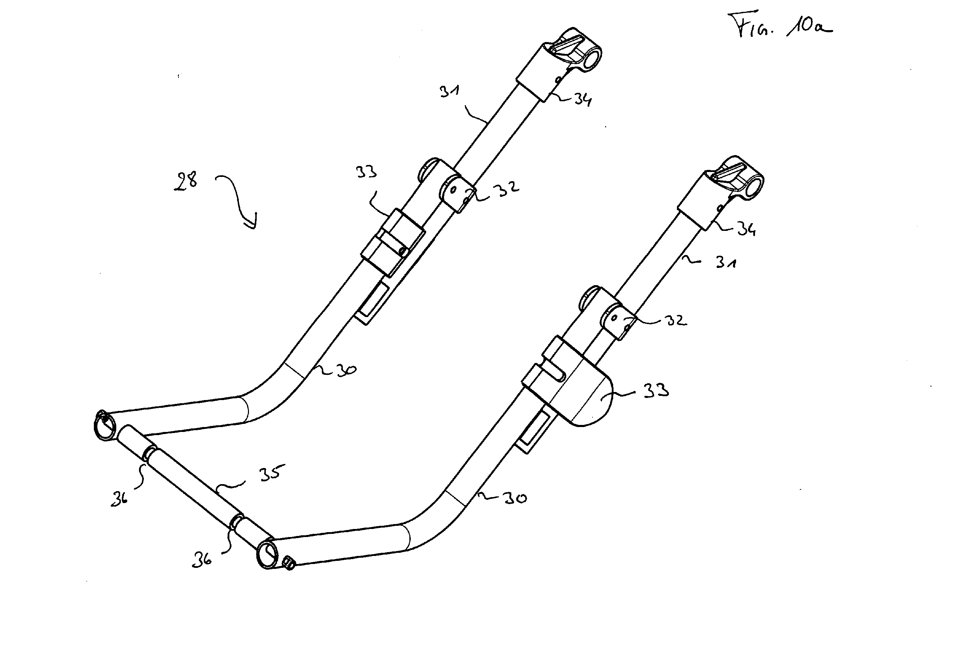

In Figuren 10a und b ist der Zufaltmechanismus 28 im Detail dargestellt. Die Stangenpaare 30, 31 sind über ein Faltgelenk 32 miteinander verbunden, wobei sie im ausgefalteten Zustand (Figur 10a) durch Klipps 33 arretiert werden können. Über die Verbindungsteile 34 wird der Feststellmechanismus 27 mit der Querstange 29 des Sitzgestänges 3 verbunden. Eine Besonderheit stellt das Rohr 35 da, das als Anlauf-Distanzrohr für den Feststellbügel 27 dient. Im ausgefalteten Zustand dienen die Rillen 36 des Rohres 35 als Führung für den Faltbügel 27 beim Einschieben des Trittbrettes 10 über den Längsrahmen 8. Dadurch bewegt sich der Feststellbügel 27 parallel zum Trittbrett 10 und kann daher die hinteren Laufräder 1d, e nicht blockieren. Im ausgezogenen Zustand sowie im zusammengeschobenen, zusammengefalteten Zustand wird der Feststellbügel 27 nur noch am laufradfernen Ende von dem Anlauf-Distanzrohr 35 unterstützt, so dass er sich in einer zur Trittbrett 10 schrägen Stellung befindet und die Laufräder 1d, e blockiert.

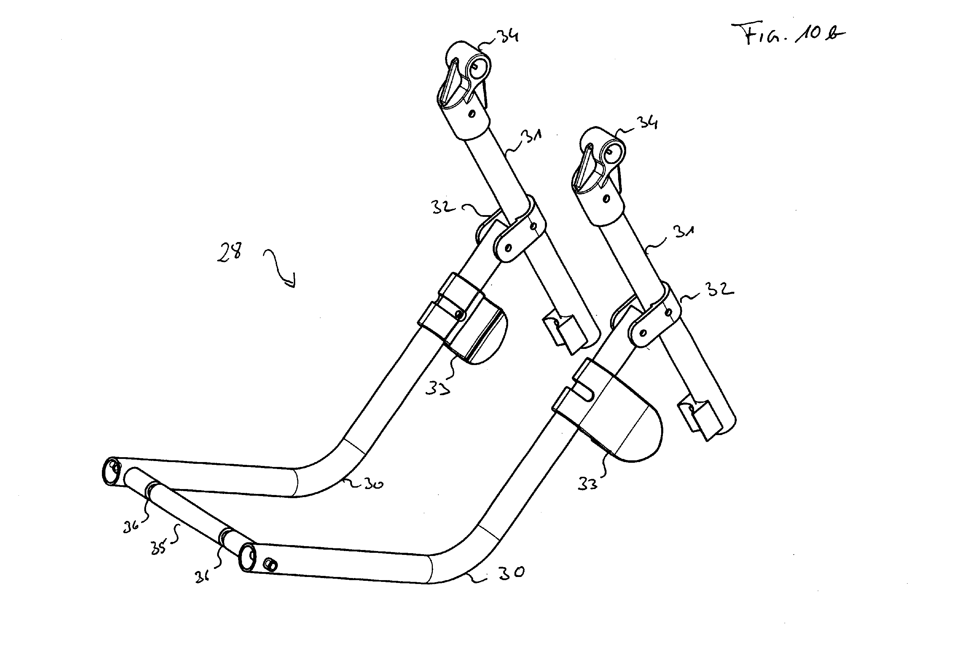

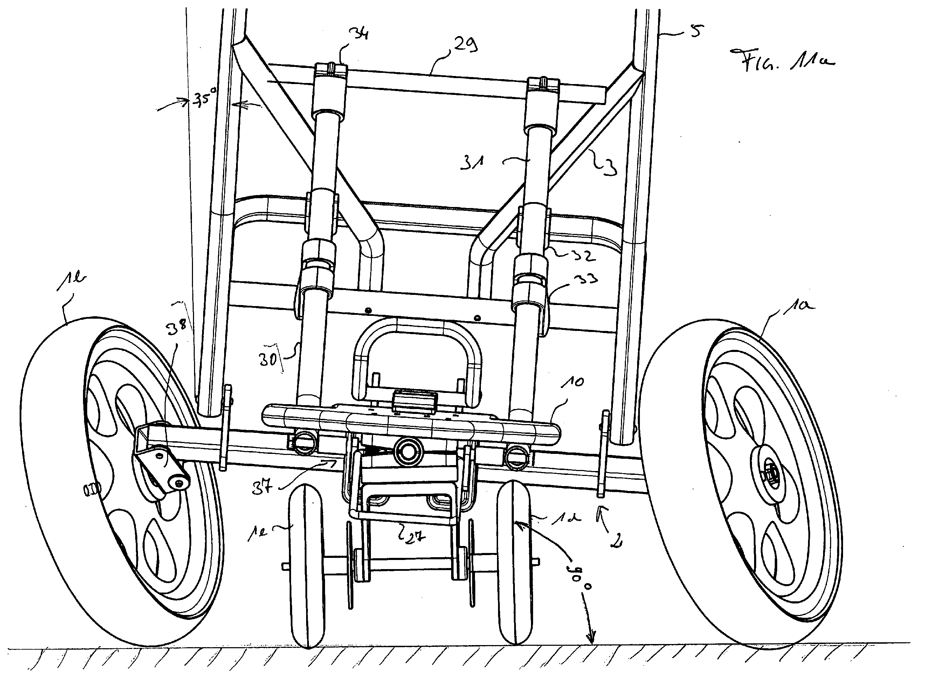

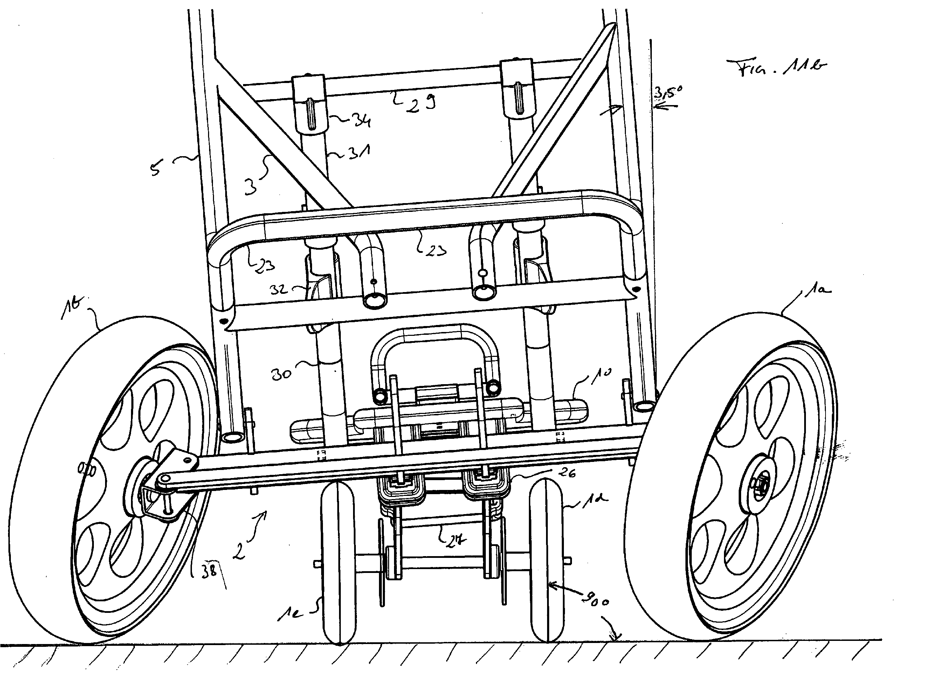

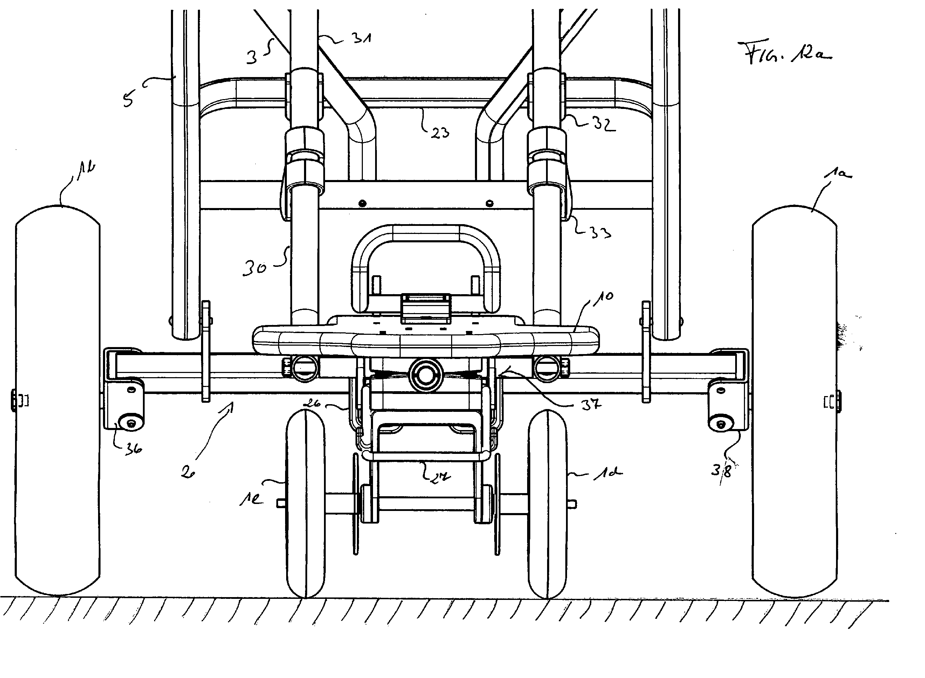

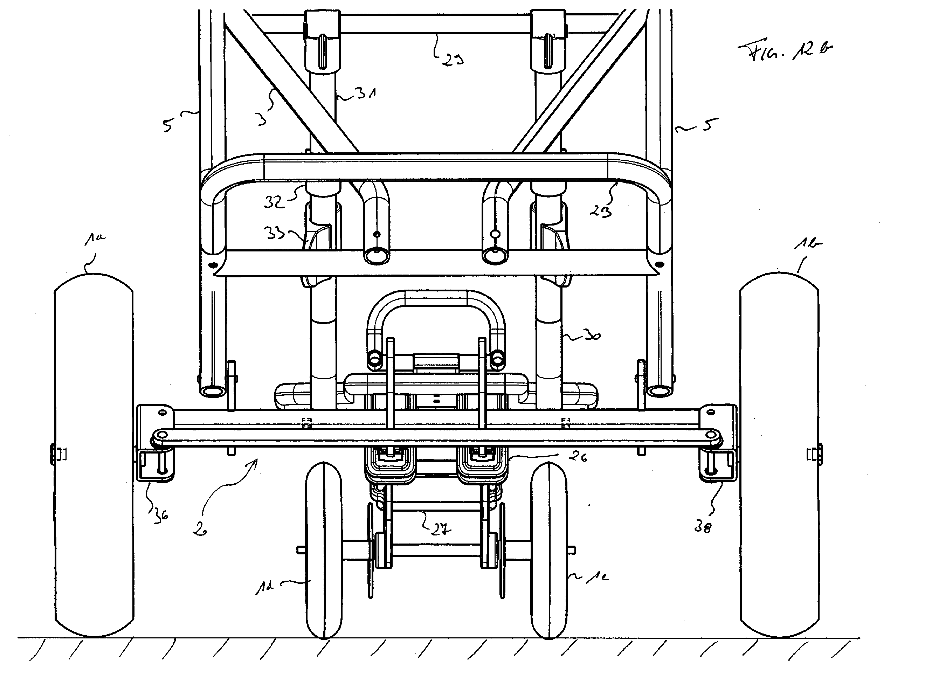

In den Figuren 11a, b, 12, a, b ist die Funktionsweise des Kippsattels 37 zu sehen, der als Wipplager für die hinteren Laufräder 1d, e dient.

Während in Figuren 12a, b die vorderen Laufräder 1a, 1b und die hinteren Laufräder 1d, e im Geradelauf dargestellt sind, und zwar in Figur 12a von hinten und in Figur 12b von vorne, ist in den Figuren 1a von hinten und Figur 11b von vorne die Situation beim Durchfahren einer Rechtskurve bei nicht drehbaren hinteren Laufrädern 1d, e bzw. blockierten drehbaren hinteren Laufrädern 1d, e gezeigt. Die vorderen Laufräder 1a, 1b sind über die Kipplager 38 kippbar gelagert, so dass sie beim Vollführen einer Kurve dem durch Gewichtsverlagerung der fahrenden Person bedingten Kippgrad des Radstandes und übrigen Kinderwagen folgen können. Im dargestelltem Zustand besteht der Kippungsgrad 3,5°. Wenn nun die hinteren Laufräder 1d, e nicht wippbar gelagert wären, würde eins der beiden Räder 1d, e die Bodenberührung verlieren und so zu einer Instabilität des Kinderwagens führen. Durch den Kippsattel 37 wird aber die Kippung des übrigen Kinderwagens um 3,5° kompensiert, so dass beide Räder 1d, e nach wie vor im rechten Winkel zum Boden stehen und beide Bodenberührung aufweisen.

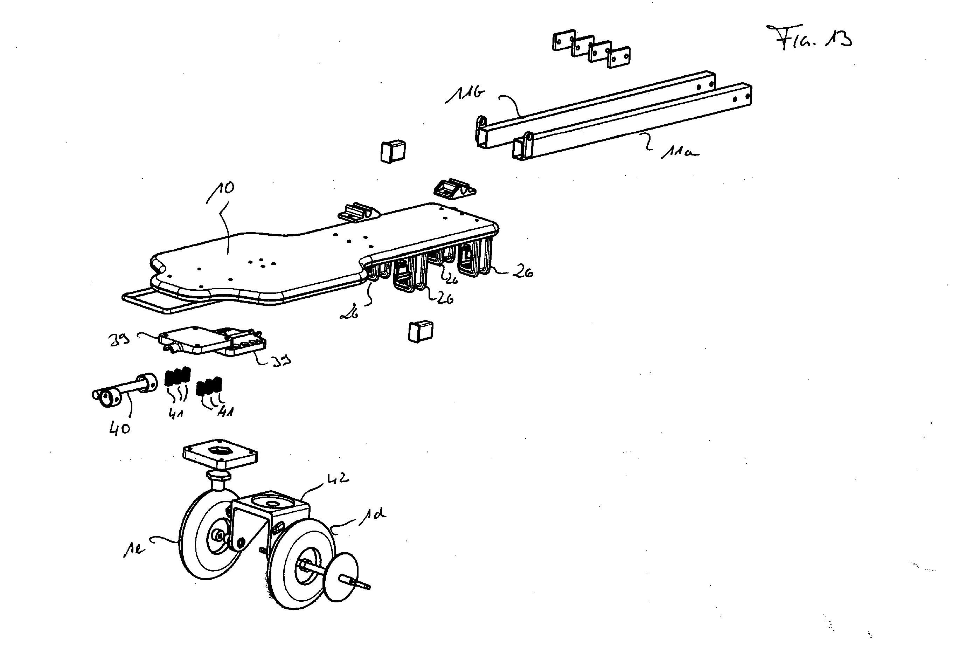

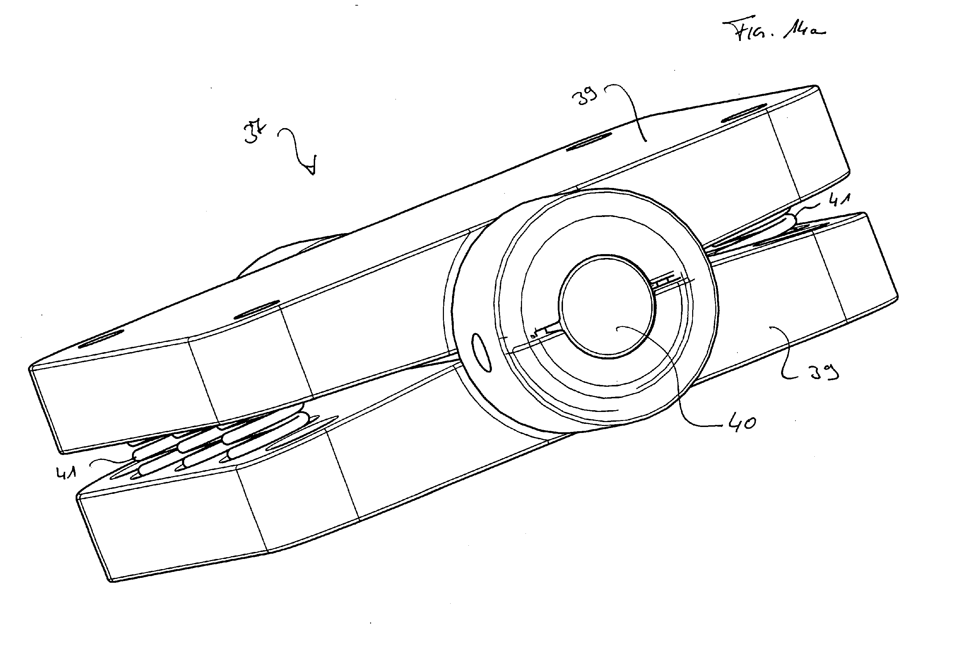

In Figur 13 sind das Trittbrett 10 und der Längsrahmen 8 sowie die hinteren Laufräder 1d, e mit ihrer Lagerung in Explosionsdarstellung gezeigt. Besonders interessant sind die beiden Holme 11a, b, die den Längsrahmen 8 bilden, sowie das Trittbrett 10, an dem der Feststellbügel 27 und die Schiebelemente 26 befestigt sind, mittels derer das Trittbrett 10 verschiebbar auf den Holmen 11 a, b gelagert ist. Der Kippsattel 37 besteht aus zwei um eine Achse 40 aufeinander und auseinander drehbar gelagerten Platten 39 auf, die durch sechs Federn 41 beabstandet sind.

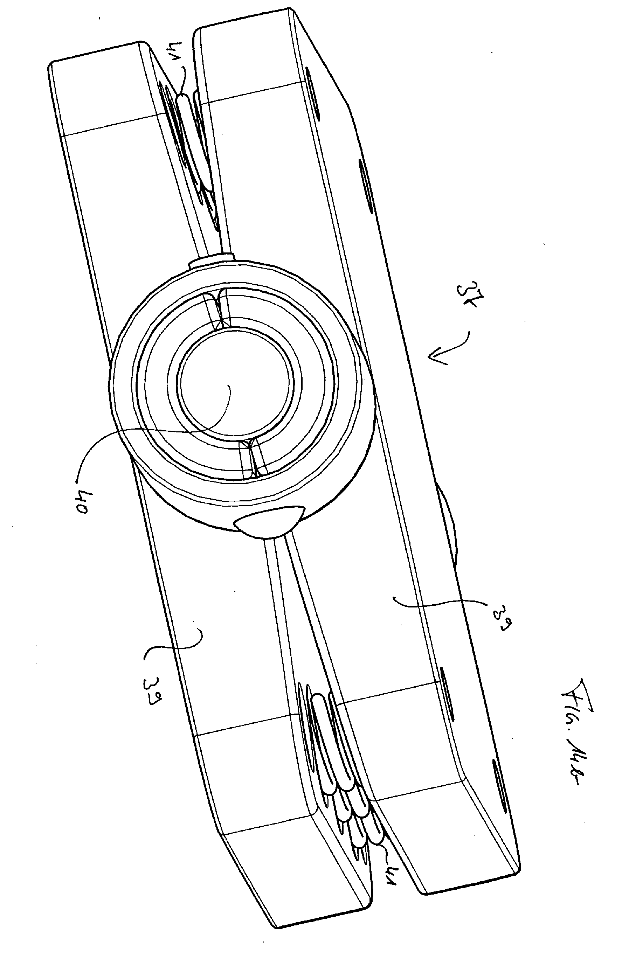

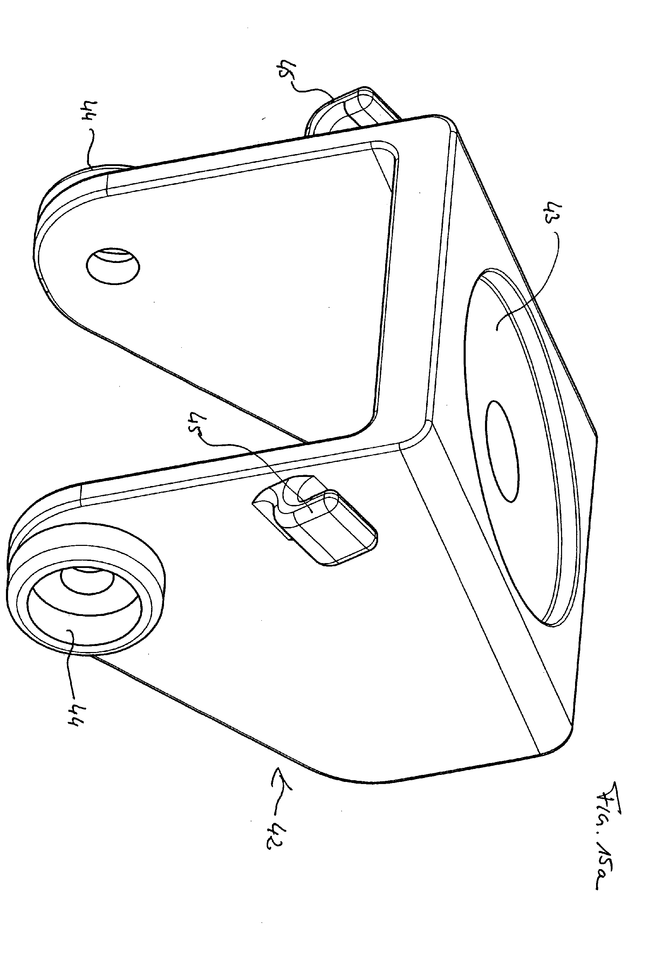

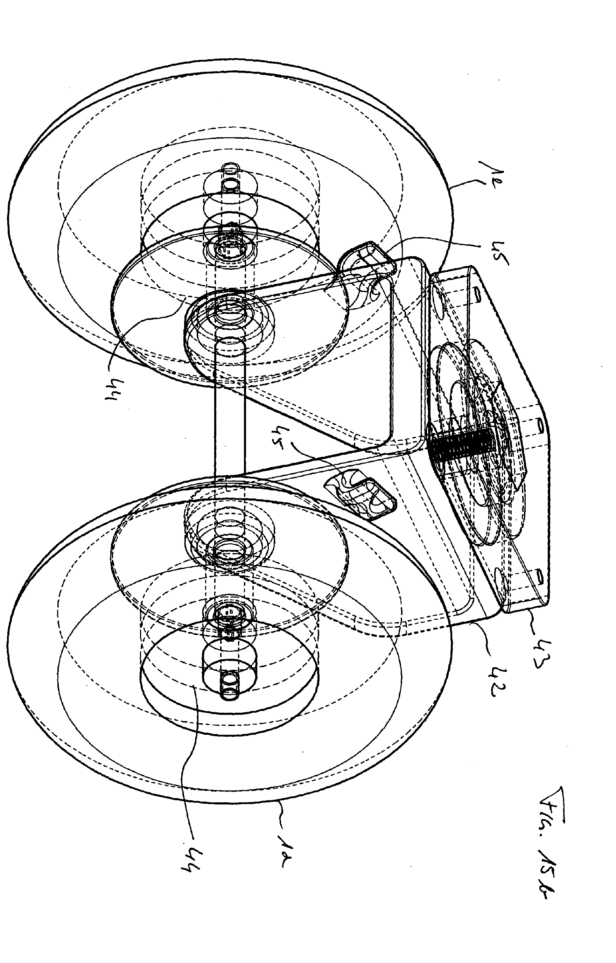

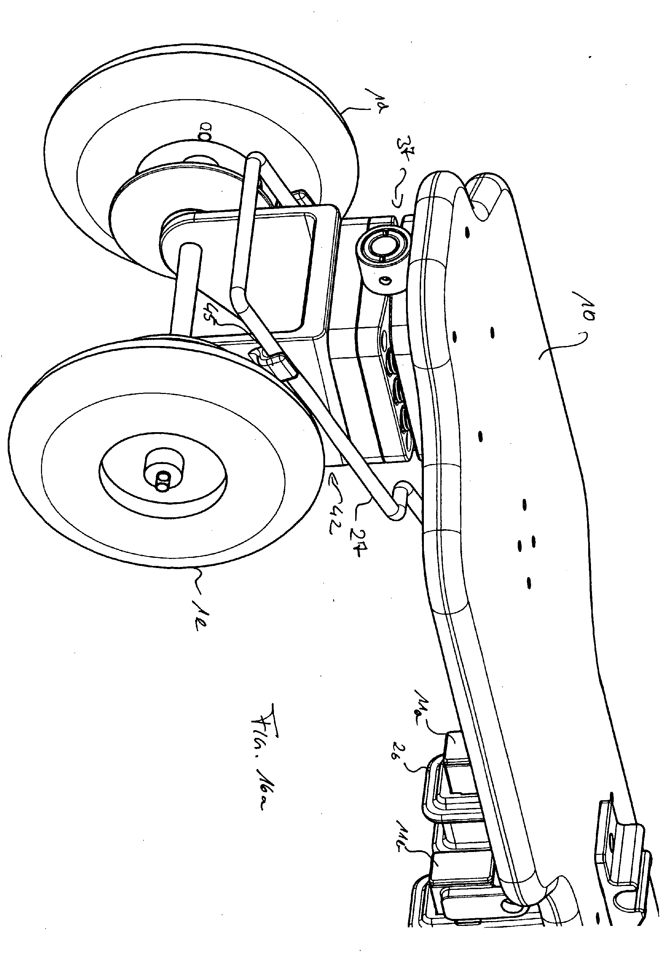

In zusammengebautem Zustand ist der Kippsattel 37 in Figur 14a von vorne perspektivisch und in Figur 14b von hinten perspektivisch dargestellt. Die Laufräder 1d, e sind an einem Lagerbock 42 befestigt, der in Figur 15a im Detail zu erkennen ist. Als Besonderheiten weist dieser Lagerbock 42 ein Axial-Rillenkugellager 43 für die drehbare Lagerung sowie zwei Rillenkugellager 44 für die unmittelbare Lagerung der Laufräder 1d, e auf. Ferner weist der Lagerbock 42 zwei Klipps 45, die den Feststellbügel 27 im schrägen Zustand arretieren, so dass eine Drehbewegung der Laufräder 1d, e verhindert wird. In Figur 14b ist der Lagerbock 42 noch mal mit eingebauten Kugellagern 43, 44 und Laufrädern 1 d, e dargestellt.

In den Figuren 16a - c ist im Detail noch mal die Funktionsweise des Feststellbügels 27 gezeigt. Im ausgezogenen Zustand befindet sich der Feststellbügel 27 quer zum Trittbrett 10, wird in den Seitenklipps 45 des Lagerblocks 42 arretiert und verhindert so jegliche Drehbewegung der Laufräder 1d, e. Etwaige Verkippungen des Trittbretts 10 bei Kurvenfahrten werden durch den Kippsattel 37 kompensiert. In Figur 16b ist noch einmal der eingeschobene Zustand gezeigt, bei dem der Feststellbügel 27 wieder im Wesentlichen parallel zum Trittbrett 10 verläuft. In Figur 16c ist besonders deutlich zu sehen, dass der Feststellbügel 27 dabei von dem Anlauf-Distanzrohr 35 bzw. von den darin befindlichen Rillen 36 des Zufaltmechanismus 28 geführt wird

### Bezugszeichen

- 1 a, 1 b: vorderes Laufrad
- 1c: hinteres Laufrad
- 1d: erstes hinteres Laufrad
- 1e: zweites hinteres Laufrad
- 2: Achsrahmen
- 3: Sitzgestänge
- 4, 4a, 4b: Sitzelement
- 5: Schiebegestänge
- 6: Schiebegriff
- 7: schiebegriffseitig
- 8: Längsrahmen
- 9: Fahrtrichtung
- 10: Trittbrett
- 11 a, b: Holme
- 12: vorderer Rohrabschnitt
- 13: hinterer Rohrabschnitt
- 14a,14b: Führungen vorderer Rohrabschnitt
- 14c,14d: Führungen hinterer Rohrabschnitt
- 15: Verbindungselement
- 16: Gelenk
- 17: Bremse
- 18: Betätigungsgriff Bremse
- 19: gelenkige Anbringung
- 20: Verstellgelenk
- 21: achsrahmennahes Längsrahmenteil
- 22: achsrahmenfernes Längsrahmenteil
- 23: Stoßschutz
- 24: Klappgelenk
- 25: Laufbock
- 26: Schiebeelemente
- 27: Feststellbügel
- 28: Zufaltmechanismus
- 29: Querstange
- 30: Stange
- 31: Stange
- 32: Faltgelenk
- 33: Klipps
- 34: Verbindungselemente
- 35: Rohr
- 36: Rillen
- 37: Kippsattel
- 38: Kipplager
- 39: Platte
- 40: Achse
- 41: Federn
- 42: Lagerbock
- 43: Axial-Rillenlager
- 44: Rillenlager
- 45: Klipps

## Patentansprüche

1. Kinderwagen mit mindestens drei Laufrädern (1a, 1b, 1c, 1d, 1e) und einem Achsrahmen (2), an dem mindestens ein vorderes Laufrad (1a, 1b) gelagert ist, einem an dem Achsrahmen (2) angreifenden Sitzgestänge (3) zur Aufnahme eines Sitzelementes (4), einem an dem Achsrahmen (2) und/oder dem Sitzgestänge (3) angreifenden Schiebegestänge (5), dessen oberes Ende als Schiebegriff (6) ausgebildet ist, und einem schiebegriffseitig (7) an dem Achsrahmen (2) angreifenden Längsrahmen (8), an dem in Fahrtrichtung (9) verschiebbar mindestens ein hinteres Laufrad (1c, 1d, 1e) gelagert und ein Trittbrett (10) ausgebildet ist.

2. Kinderwagen nach Anspruch 1, **dadurch gekennzeichnet, daß** das mindestens eine hintere Laufrad (1d, 1e) an dem Trittbrett (10) gelagert ist und das Trittbrett (10) in Fahrtrichtung verschiebbar am Längsrahmen (8) gelagert ist.

3. Kinderwagen mit mindestens drei Laufrädern (1a, 1b, 1c, 1d, 1e) und einem Achsrahmen (2), an dem mindestens ein vorderes Laufrad (1a) gelagert ist, einem an dem Achsrahmen (2) angreifenden Sitzgestänge (3) zur Aufnahme eines Sitzelementes (4), einem an dem Achsrahmen (2) und/oder dem Sitzgestänge (3) angreifenden Schiebegestänge (5), dessen oberes Ende als Schiebegriff (6) ausgebildet ist, und einem schiebegriffseitig (7) an dem Achsrahmen (2) angreifenden Längsrahmen (8), der in Form von einem achsrahmennahen (21) und einem achsrahmenfernen Teil (22) ausgebildet ist, die klappbar miteinander verbunden sind, wobei das achsrahmenferne Teil (22) zwei Laufräder (1d, 1e) aufweist, von denen das eine Laufrad (1d) Bodenberührung hat, wenn das achsrahmenferne Teil (22) auf das achsrahmennahe Teil (21) geklappt ist und das andere Laufrad (1e) Bodenberührung hat, wenn beide Längsrahmenteile (21, 22) auseinandergeklappt sind.

4. Kinderwagen nach Anspruch 3, **dadurch gekennzeichnet, dass** das achsrahmenferne Längsrahmenteil (22) als Trittbrett (10) ausgebildet ist.

5. Kinderwagen nach Anspruch 1, **dadurch gekennzeichnet, dass** der Längsrahmen (8) zwei in Fahrtrichtung (9) parallel verlaufende Holme (11a, 11b) umfasst.

6. Kinderwagen nach Anspruch 1 oder 5, **dadurch gekennzeichnet, dass** die Holme (11a, 11b) jeweils in einen vorderen Rohrabschnitt (12) in Führungen (14a, 14b, 14c, 14d) verschiebbar gelagert sind.

7. Kinderwagen nach Anspruch 6, **dadurch gekennzeichnet, dass** jeweils der hintere Rohrabschnitt (13) gegenüber dem vorderen Rohrabschnitt (12) in Führungen (14a, 14b, 14c, 14d) verschiebbar gelagert sind.

8. Kinderwagen nach Anspruch 6 oder 7, **dadurch gekennzeichnet, dass** jeweils der vordere Rohrabschnitt (12) mit einem Verbindungselement (15) an dem Hauptrahmen (2) befestigt ist.

9. Kinderwagen nach Anspruch 8, **dadurch gekennzeichnet, dass** das Verbindungselement (15) als Gelenk (16) ausgebildet ist.

10. Kinderwagen nach einem der Ansprüche 6 bis 9, **dadurch gekennzeichnet, dass** jeweils der hintere Rohrabschnitt (13) zur Lagerung des mindestens einen hinteren Laufrades (1c) ausgebildet ist.

11. Kinderwagen nach einem der Ansprüche 6 bis 10, **dadurch gekennzeichnet, dass** das Trittbrett (10) an dem jeweils hinteren Rohrabschnitt (13) befestigt ist.

12. Kinderwagen nach einem der Ansprüche 1 bis 11, **dadurch gekennzeichnet, daß** das mindestens eine hintere Laufrad (1c, 1d, 1e) senkrecht zur Rollrichtung drehbar gelagert ist.

13. Kinderwagen nach Anspruch 12, **dadurch gekennzeichnet, daß** Mittel (27) zur Blockierung der Drehbarkeit des mindestens einen hinteren Laufrads (1c, 1d, 1e) am Längsrahmen (8) und/oder am Trittbrett (10) vorgesehen sind.

14. Kinderwagen nach Anspruch 1, 2 oder einem der Ansprüche 1 bis 13, **dadurch gekennzeichnet, daß** das mindestens eine hintere Laufrad (1c, 1d, 1e) wippbar gelagert ist.

15. Kinderwagen nach einem der Ansprüche 1 bis 14, **dadurch gekennzeichnet, daß** zwei zueinander parallele hintere Laufräder (1d, 1e) vorgesehen sind.

16. Kinderwagen nach einem der Ansprüche 1 bis 15, **dadurch gekennzeichnet, dass** ein Stoßschutz (23) vorgesehen ist, der am Achsrahmen (2) und/oder am Sitzgestänge (3) angreift.

17. Kinderwagen nach einem der Ansprüche 1 bis 16, **dadurch gekennzeichnet, dass** ein Zufaltmechanismus (28) vorgesehen ist, der am Achsrahmen (2) und/oder am Sitzgestänge (3) und/oder am Längsrahmen (8) angreift, um den Kinderwagen zusammenfalten zu können.

18. Kinderwagen nach einem der Ansprüche 1 bis 17, **dadurch gekennzeichnet, dass** die Laufräder (1a, 1b, 1c, 1d, 1e) mittels Kugellager (43, 44) gelagert sind.

19. Kinderwagen nach einem der Ansprüche 1 bis 18, **dadurch gekennzeichnet, dass** an dem mindestens einen vorderen Laufrad (1a, 1b) eine Bremse (17) angeordnet ist.

20. Kinderwagen nach Anspruch 19, **dadurch gekennzeichnet, dass** die Bremse (17) über einen am Schiebegriff (6) angeordneten Betätigungsgriff (18) bedienbar ist.

21. Kinderwagen nach einem der Ansprüche 1 bis 20, **dadurch gekennzeichnet, dass** das Schiebegestänge (5) über eine gelenkige Anbringung (19) in einer Fahrstellung und einer Transportstellung fixierbar ist.

22. Kinderwagen nach einem der Ansprüche 1 bis 21, **dadurch gekennzeichnet, dass** der Schiebegriff (6) an dem Schiebegestänge (5) mit einem Verstellgelenk (20) angebracht ist.

23. Kinderwagen nach einem der Ansprüche 1 bis 22, **dadurch gekennzeichnet, dass** das mindestens eine vordere Laufrad (1a, 1b) durchmessergrößer als das mindestens eine hintere Laufrad (1c, 1d, 1e) ausgebildet ist.

24. Kinderwagen nach einem der Ansprüche 1 bis 23, **dadurch gekennzeichnet, dass** an dem Hauptrahmen (2) Federelemente angebracht sind.
